(19) **Europäisches Patentamt / European Patent Office / Office européen des brevets**

(11) **EP 4 108 450 A1**

(12) # EUROPEAN PATENT APPLICATION
published in accordance with Art. 153(4) EPC

(43) Date of publication:
**28.12.2022 Bulletin 2022/52**

(21) Application number: **21744624.4**

(22) Date of filing: **22.01.2021**

(51) International Patent Classification (IPC):
**B32B 27/00** (2006.01)     **E04F 13/08** (2006.01)
**B32B 3/30** (2006.01)      **B32B 33/00** (2006.01)

(52) Cooperative Patent Classification (CPC):
**B32B 3/30; B32B 27/00; B32B 33/00; E04F 13/08**

(86) International application number:
**PCT/JP2021/002264**

(87) International publication number:
**WO 2021/149803 (29.07.2021 Gazette 2021/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.01.2020 JP 2020009981**
**30.09.2020 JP 2020165941**

(71) Applicant: **Dai Nippon Printing Co., Ltd.**
**Tokyo 162-8001 (JP)**

(72) Inventors:
• **ISEMORI, Yuichi**
**Tokyo 162-8001 (JP)**
• **OONO, Takaya**
**Tokyo 162-8001 (JP)**

• **TABATA, Masatoshi**
**Tokyo 162-8001 (JP)**
• **OOTAKE, Kazuha**
**Tokyo 162-8001 (JP)**
• **TANISADA, Seiji**
**Tokyo 162-8001 (JP)**
• **SUZUKI, Yasuhiro**
**Tokyo 162-8001 (JP)**
• **OOHARA, Yuji**
**Tokyo 162-8001 (JP)**
• **TAKAGI, Yuki**
**Tokyo 162-8001 (JP)**
• **NAKAZAWA, Ryo**
**Tokyo 162-8001 (JP)**

(74) Representative: **Müller-Boré & Partner**
**Patentanwälte PartG mbB**
**Friedenheimer Brücke 21**
**80639 München (DE)**

(54) **DECORATIVE SHEET, DECORATIVE PANEL, AND MANUFACTURING METHOD FOR DECORATIVE SHEET**

(57)     The present invention provides a decorative sheet having extremely excellent design properties where a picture pattern of a picture layer harmonizes with depressions. The present invention relates to a decorative sheet including: a substrate; a picture layer; and a transparent resin layer, the decorative sheet including at least the picture layer and the transparent resin layer in a stated order on one side of the substrate, the picture layer including a characteristic portion and a non-characteristic portion, the transparent resin layer having a depression ($D_1$) harmonizing with the characteristic portion of the picture layer on a side opposite to a side facing the picture layer, the picture layer having a depression ($D_2$) positioned in a lamination direction of the depression ($D_1$) on a side opposite to a side facing the substrate, the depression ($D_1$) having a depth H greater than a depth h of the depression ($D_2$).

FIG.1

EP 4 108 450 A1

**Description**

TECHNICAL FIELD

The present invention relates to decorative sheets, decorative panels, and methods for producing decorative sheets.

BACKGROUND ART

Decorative panels including designed decorative sheets attached thereto are commonly used for decorating components used in building materials, furniture, home electrical appliances, or the like.

To impart visual design properties to a decorative panel, embossing or like treatment may be performed on a decorative sheet to form a pattern of protrusions and depressions, thereby imparting a 3D visual effect.

Patent Literature 1, for example, discloses a decorative sheet including, on one side of a substrate sheet, a picture printed layer on which a picture is printed, a transparent thermoplastic resin layer having a pattern of protrusions and depressions harmonizing with the picture, a surface protective layer protecting a surface of the transparent thermoplastic resin layer, and a gloss adjustment layer having a pattern in a gloss state harmonizing with the picture in the stated order, the decorative sheet including a resin constituting the surface protective layer in the protrusions and depressions of the pattern of protrusions and depressions.

In the decorative sheet of Patent Literature 1, a pattern of protrusions and depressions is formed on the side facing the surface protective layer of the transparent thermoplastic resin layer. This harmonizes the picture of the picture printed layer with the pattern of protrusions and depressions of the transparent thermoplastic resin layer to improve texture and a 3D effect, enhancing reality of the picture.

In consideration of a recent demand for extremely excellent design properties where a picture pattern of a picture layer further harmonizes with a pattern of protrusions and depressions formed on a decorative sheet, the decorative sheet of Patent Literature 1 is still insufficient and has a room for improvement.

CITATION LIST

- Patent Literature

Patent Literature 1: JP 2016-182748 A

SUMMARY OF INVENTION

- Technical Problem

The present invention aims to solve the above problem and provide a decorative sheet having extremely excellent design properties where a picture pattern of a picture layer harmonizes with depressions.

- Solution to problem

The present inventors made intensive studies to solve the above problem, and found out that extremely excellent design properties where a picture pattern of a picture layer further harmonizes with depressions are exhibited by a decorative sheet including: a substrate; a picture layer; and a transparent resin layer, the decorative sheet including at least the picture layer and the transparent resin layer in the stated order on one side of the substrate, wherein the transparent resin layer has a depression ($D_1$) harmonizing with a characteristic portion of the picture layer, the picture layer has a depression ($D_2$) positioned in a lamination direction of the depression ($D_1$), and the depression ($D_1$) has a depth H greater than a depth h of the depression ($D_2$). Thus, the present invention was completed.

Specifically, the present invention relates to a decorative sheet including: a substrate; a picture layer; and a transparent resin layer, the decorative sheet including at least the picture layer and the transparent resin layer in a stated order on one side of the substrate, the picture layer including a characteristic portion and a non-characteristic portion, the transparent resin layer having a depression ($D_1$) harmonizing with the characteristic portion of the picture layer on a side opposite to a side facing the picture layer, the picture layer having a depression ($D_2$) positioned in a lamination direction of the depression ($D_1$) on a side opposite to a side facing the substrate, the depression ($D_1$) having a depth H greater than a depth h of the depression ($D_2$).

In the decorative sheet of the present invention, a ratio (h/H) of the depth h of the depression ($D_2$) to the depth H of the depression ($D_1$) is preferably 0.25 or more and 0.60 or less.

The decorative sheet of the present invention preferably further includes a surface protective layer on the side opposite to a side facing the picture layer of the transparent resin layer.

In the decorative sheet of the present invention, the characteristic portion of the picture layer is preferably: a vessel, a knot, an annual ring, or a mottle in a wood-grain pattern; or a stripe formed by different crystalline components in a rock or a crack in a stone-grain pattern.

In the decorative sheet of the present invention, the picture layer preferably has a color difference ΔE between the characteristic portion and the non-characteristic portion of 1.3 or more.

The present invention also relates to a decorative panel including: an adherend; and the decorative sheet of the present invention on the adherend.

The present invention also relates to a method for producing a decorative sheet, including: a lamination step of laminating at least, on one side of a substrate, a picture layer including a characteristic portion and a non-characteristic portion and a transparent resin layer in a stated order to provide a laminate; and a formation step of embossing the laminate from a side opposite to a side facing the picture layer of the transparent resin layer to form a depression $(D_1)$ harmonizing with the characteristic portion of the picture layer on the side opposite to a side facing the picture layer of the transparent resin layer and a depression $(D_2)$ positioned in a lamination direction of the depression $(D_1)$ on a side opposite to a side facing the substrate of the picture layer, wherein the depression $(D_1)$ has a depth H greater than a depth h of the depression $(D_2)$.

- Advantageous Effects of Invention

The present invention can provide a decorative sheet having extremely excellent design properties where a picture pattern of a picture layer harmonizes with depressions.

BRIEF DESCRIPTION OF DRAWINGS

Fig. 1 illustrates a cross-sectional view schematically showing an example of the decorative sheet of the present invention.

Figs. 2(a) and 2(b) each illustrate a cross-sectional view schematically showing a preferred example of the decorative sheet of the present invention.

Figs. 3(a) to 3(c) each illustrate a cross-sectional view schematically showing an example of the decorative sheet of the present invention.

Fig. 4(a) illustrates a perspective view schematically showing an example of the decorative sheet of the present invention, Fig. 4(b) illustrates a top view schematically showing an example of the decorative sheet of the present invention, and Fig. 4(c) illustrates a cross-sectional view schematically showing an example of the decorative sheet of the present invention.

Fig. 5 illustrates a cross-sectional view schematically showing a preferred example of the decorative sheet of the present invention.

DESCRIPTION OF EMBODIMENTS

<Decorative sheet>

The decorative sheet of the present invention is described below.

The numerical range indicated by "-" herein means "the lower limit or larger and the upper limit or smaller" (e.g., the range "α-β" refers to the range "α or larger and β or smaller") .

The decorative sheet of the present invention includes, on one side of a substrate, at least a picture layer, a transparent resin layer, and a transparent thermoplastic resin layer in the stated order.

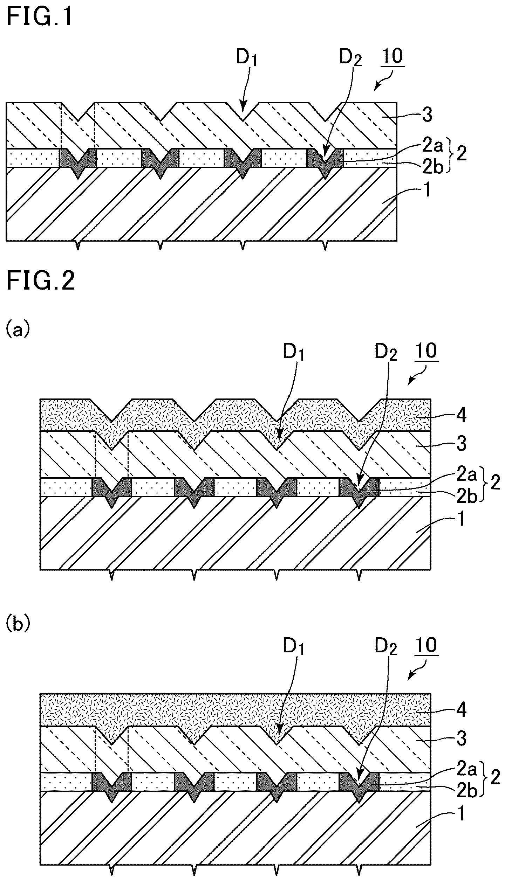

Fig. 1 illustrates a cross-sectional view schematically showing an example of the decorative sheet.

In the example of the decorative sheet of the present invention illustrated in Fig. 1, a decorative sheet 10 includes, on one side of a substrate 1, at least a picture layer 2 and a transparent resin layer 3 in the stated order.

The picture layer 2 includes characteristic portions 2a and non-characteristic portions 2b.

The transparent resin layer 3 has depressions $(D_1)$ harmonizing with the characteristic portions of the picture layer 2 on a side opposite to a side facing the picture layer 2. The picture layer 2 has depressions $(D_2)$ positioned in the lamination direction of the depressions $(D_1)$ on a side opposite to a side facing the substrate 1.

A description is first given on each layer constituting the decorative sheet 10.

(Substrate)

The decorative sheet 10 of the present invention includes the substrate 1.

The substrate 1 is not limited, and preferably contains a non-halogen thermoplastic resin.

Examples of the non-halogen thermoplastic resin include: olefin-based thermoplastic resins such as low-density polyethylene (including linear low-density polyethylene), medium-density polyethylene, high-density polyethylene, ethylene-a olefin copolymers, homopolypropylene, polymethyl pentene, polybutene, ethylene-propylene copolymers, propylene-butene copolymers, ethylene-vinyl acetate copolymers, saponified ethylene-vinyl acetate copolymers, and mixtures of these; thermoplastic ester-based resins such as polyethylene terephthalate, polybutylene terephthalate, polyethylene naphthalate, polyethylene naphthalate-isophthalate copolymers, polycarbonate, and polyarylate; acrylic thermoplastic resins such as polymethyl methacrylate, polyethyl methacrylate, polyethyl acrylate, and polybutyl actylate; polyamide-based thermoplastic resins such as Nylon 6 and Nylon 66; polyimides; polyurethanes; polystyrene; and acrylonitrile-butadiene-styrene resins.

Each of these non-halogen thermoplastic resins may be used alone or in combination of two or more.

Among these, preferred are olefin-based thermoplastic resins because they are excellent in printability of the picture layer 2 and inexpensive.

The substrate 1 may be colored. In this case, a colorant (a pigment or a dye) may be added to the non-halogen thermoplastic resin for coloring.

Examples of a usable colorant include inorganic pigments such as titanium dioxide, carbon black, and iron oxide and organic pigments such as phthalocyanine blue, as well as various dyes.

One or more colorants may be selected from known or commercially available ones. The amount of the colorant added may be appropriately determined in accordance with desired coloration.

The substrate 1 may contain various additives such as fillers, matting agents, blowing agents, flame retardants, lubricants, antistatic agents, antioxidants, ultraviolet absorbers, or light stabilizers, if needed.

The substrate 1 may have any thickness. The thickness is preferably 40 $\mu$m or greater and 200 $\mu$m or smaller.

The substrate 1 may consist of a single layer or include multiple layers.

(Picture layer)

The decorative sheet 10 includes the picture layer 2.

The picture layer 2 is a layer for imparting decorativeness to the decorative sheet 10.

The picture layer 2 may be, for example, a design layer formed by printing various patterns using ink and a printer, or a layer combining a hiding layer and a design layer.

The hiding layer can add an intended color to the substrate 1 which may be stained or colored unevenly, thereby adjusting the color of the surface.

The design layer can provide the decorative sheet with various picture patterns such as wood-grain patterns, stone grain patterns imitating the surface of a rock such as marble patterns (e.g., pattern of travertine marble), fabric patterns imitating fabric texture or fabric-like patterns, tiled patterns, brick-masonry patterns, and parquet or patchwork patterns which are combinations of the above patterns.

These picture patterns are formed by typical polychromic printing in process colors including yellow, red, blue, and black, or polychromic printing in spot colors in which individual colors constituting the pattern are used.

The ink composition used for the picture layer 2 is a composition prepared by appropriately mixing a binder resin with a colorant such as a pigment and a dye, an extender pigment, a solvent, a stabilizer, a plasticizer, a catalyst, a curing agent, and the like.

Any binder resin may be used. Preferred examples thereof include urethane resins, acrylic resins, urethane-acrylic resins, urethane-acrylic copolymer resins, vinyl chloride/vinyl acetate copolymer resins, vinyl chloride/vinyl acetate/acrylic copolymer resins, acrylic resins, polyester resins, and nitrocellulose resins. Any of these binder resins may be used alone or in combination of two or more.

Preferred examples of the colorant include: inorganic pigments such as carbon black (Chinese ink), iron black, titanium white, antimony white, chrome yellow, titanium yellow, red iron oxide, cadmium red, ultramarine, and cobalt blue; organic pigments or dyes such as quinacridone red, iso-indolinone yellow, and phthalocyanine blue; metal pigments formed of foil flakes of aluminum, brass, and the like; and pearl-like luster pigments (pearl pigments) formed of foil flakes of titanium dioxide-coated mica, basic lead carbonate, and the like.

Each of these may be used alone or in combination of two or more.

The picture layer 2 includes the characteristic portions 2a and the non-characteristic portions 2b.

The characteristic portions 2a refer to portions having a characteristic enabling recognition of a picture pattern of the picture layer 2. In the case where the picture layer 2 has a wood-grain pattern, a vessel, a knot, an annual ring, and a mottle correspond to the characteristic portions 2a. In the case where the picture layer 2 has a stone-grain pattern, a stripe formed by different crystalline components in a rock and a pattern expressed by cracks (cracked pattern) correspond to the characteristic portions 2a.

The non-characteristic portions 2b refer to portions other than the characteristic portions 2a.

The picture layer 2 preferably has a color difference $\Delta E$ between the characteristic portions 2a and the non-characteristic portions 2b of 1.3 or more.

Such a color difference $\Delta E$ contributes to further improvement of the design properties.

The color difference $\Delta E$ is more preferably 1.5 or more, still more preferably 1.8 or more, particularly preferably 2.0 or more.

As used herein, the color difference $\Delta E$ is measured and calculated as described below.

$L^*$, $a^*$, and $b^*$ values in the $L^*a^*b^*$ colorimetric system are measured in the characteristic portions 2a and the non-characteristic portions 2b of the decorative sheet 10 using a spectrophotometer (SE 6000 available from Nippon Denshoku Industries Co., Ltd.) based on the total reflection light (specular reflection light + diffused reflection light) under irradiation with light (illuminant D65) to the surface on the side appearing the transparent resin layer 3 (in the case of including a surface protective layer 4, the side appearing the surface protective layer) of the decorative sheet 10 at an incident angle of 10 degrees (direction normal to the surface on the transparent resin layer 3 side = 0 degrees).

Here, the $L^*$, $a^*$, and $b^*$ values in the characteristic portions 2a are denoted as $L_1^*$, $a_1^*$, and $b_1^*$, respectively. The $L^*$, $a^*$, and $b^*$ values in the non-characteristic portions 2b are denoted as $L_2^*$, $a_2^*$, and $b_2^*$, respectively.

The "$L^*a^*b^*$ colorimetric system" refers to the colorimetric system standardized by International Commission on Illumination (CIE) and employed in JIS Z8781-4:2013. In the $L^*a^*b^*$ colorimetric system, the lightness is expressed by $L^*$, and the chromaticity indicating the color tone and chrominance is expressed by $a^*$ and $b^*$.

The values obtained by the measurement are substituted into the following equation for calculation of the color difference.

$$\text{Color difference } \Delta E = ((L_1^* - L_2^*)^2 + (a_1^* - a_2^*)^2 + (b_1^* - b_2^*)^2)^{1/2}$$

The picture layer 2 may have any thickness. The thickness is preferably 0.1 $\mu$m or larger, more preferably 0.5 $\mu$m or larger and 600 $\mu$m or smaller. Having a thickness within the range indicated above, the picture layer 2 can impart an excellent design to the decorative sheet 10 and also can have hiding properties.

The picture layer 2 can be formed by, for example, gravure printing, offset printing, screen printing, flexo printing, electrostatic printing, or ink-jet printing. In the case of forming a hiding layer, various coating methods may be employed such as roll coating, knife coating, air knife coating, die coating, lip coating, comma coating, kiss coating, flow coating, or dip coating.

(Transparent resin layer)

The decorative sheet 10 includes the transparent resin layer 3.

The transparent resin layer 3 is preferably a layer formed of a thermoplastic resin.

The transparent resin layer 3 may be any layer through which the picture layer 2 is visible, and may be colorless and transparent, colored transparent, or semitransparent.

Examples of the thermoplastic resin include: olefin resins such as polyethylene, polypropylene, polybutene, polymethylpentene, and olefin-based thermoplastic elastomers; polyester resins such as polyethylene terephthalate, polybutylene terephthalate, polyethylene naphthalate, ethylene glycol-terephthalic acid-isophthalic acid copolymer resins, terephthalic acid-ethylene glycol-1,4-cyclohexane dimethanol copolymer resins, and polyester-based thermoplastic elastomers; acrylic resins such as polymethyl(meth)acrylate, methyl(meth)acrylate-butyl(meth)acrylate copolymer resins, and methyl(meth)acrylate-styrene copolymer resins; polycarbonate resins; polyvinyl chloride; polystyrene; and ionomers.

In particular, polyethylene or polypropylene is more preferred as it has high tensile strength and is excellent in chemical resistance to be advantageous in the production process.

The term "(meth)acrylate" as used herein refers to acrylate or methacrylate.

The polyethylene may be an ethylene homopolymer or a copolymer of ethylene and a different comonomer copolymerizable with ethylene (e.g., an $\alpha$-olefin such as propylene, 1-butene, 1-hexene, or 1-octene, vinyl acetate, and vinyl alcohol).

Examples of a polyethylene resin include high density polyethylene (HDPE), medium density polyethylene (MDPE), low density polyethylene (LDPE), linear low density polyethylene (LLDPE), very low density polyethylene (VLDPE), ultra high molecular weight polyethylene (UHMWPE), and crosslinked polyethylene (PEX).

Each of these polyethylenes may be used alone or in combination of two or more.

The polypropylene may be a propylene homopolymer or a copolymer of propylene and a different comonomer copolymerizable with propylene (e.g., an α-olefin such as ethylene, 1-butene, 1-hexene, or 1-octene, vinyl acetate, vinyl alcohol).

Each of these polypropylenes may be used alone or in combination of two or more.

In the present invention, particularly preferred is a propylene homopolymer (homopolypropylene) in order to achieve excellent abrasion resistance and excellent bendability.

The transparent resin layer 3 may consist of a single layer or include multiple layers.

In order to achieve excellent abrasion resistance and excellent bendability, the transparent resin layer 3 preferably has a thickness of 30 μm or larger and 150 μm or smaller, more preferably 40 μm or larger and 120 μm or smaller.

In the case where the transparent resin layer 3 includes multiple layers, the transparent resin layer 3 has a total thickness of preferably 30 μm or larger and 150 μm or smaller, more preferably 40 μm or larger and 120 μm or smaller.

In the case where the transparent resin layer 3 includes multiple layers, the types of the resins forming the multiple layers may be the same or different, and the thicknesses of the multiple layers may be the same or different.

Two or more transparent resin layers 3 may be laminated by any common method. Examples of the method include dry lamination and extrusion thermal lamination.

The transparent resin layer 3 may be subjected to surface treatment such as saponification treatment, glow discharge treatment, corona discharge treatment, plasma discharge treatment, ultraviolet (UV) treatment, or flame treatment, within a range of the gist of the present invention.

(Surface protective layer)

The decorative sheet 10 preferably includes a surface protective layer on the side opposite to the side facing the picture layer 2 of the transparent resin layer 3.

Figs. 2(a) and 2(b) each illustrate a cross-sectional view schematically showing a preferred example of the decorative sheet of the present invention.

In a preferred example of the decorative sheet of the present invention shown in each of Figs 2(a) and 2(b), the decorative sheet 10 includes, on one side of the substrate 1, at least the picture layer 2, the transparent resin layer 3, and the surface protective layer 4 in the stated order.

The surface protective layer 4 may have depressions as in Fig. 2(a) or may have no depressions as in Fig. 2(b).

The surface protective layer 4 is a layer for imparting durability (scratch resistance, contamination resistance, weather resistance, etc.) to the decorative sheet 10. The presence of the surface protective layer 4 enables more favorable protection of the picture layer 2, favorably preventing impairment of the design properties due to damage to the decorative sheet 10 itself.

The surface protective layer 4 may consist of a single layer or include multiple layers formed of the same or different material(s). The following materials may be appropriately mixed to form the surface protective layer 4.

The surface protective layer 4 is not limited. Examples thereof include those formed of a crosslink-cured product of a two-component curable resin or ionizing radiation-curable resin composition.

The crosslink-cured product is preferably transparent, and may be semitransparent or colored as long as the layer is transparent enough to allow visually recognition of the picture layer 2.

The two-component curable resin may be, for example, a binder resin of the primer layer.

The ionizing radiation-curable resin is preferably, for example, an oligomer (including what we call a prepolymer and a macromonomer) having a radical polymerizable unsaturated bond or a cationic polymerizable functional group in the molecule and/or a monomer having a radical polymerizable unsaturated bond or a cationic polymerizable functional group in the molecule. The term "ionizing radiation" herein refers to an electromagnetic wave or charged particle having energy capable of polymerizing or crosslinking molecules. The ionizing radiation is typically an electron beam (EB) or ultraviolet light (UV).

Examples of the oligomer or monomer include compounds having a radical polymerizable unsaturated group (e.g., a (meth)acryloyl group, a (meth)acryloyloxy group) or a cationic polymerizable functional group (e.g., an epoxy group) in the molecule. Each of these oligomers or monomers may be used alone, or two or more thereof may be used in admixture. The term "(meth)acryloyl group" as used herein refers to an acryloyl group or a methacryloyl group.

The oligomer having a radical polymerizable unsaturated group in the molecule is preferably, for example, an oligomer of urethane (meth)acrylate, polyester (meth)acrylate, epoxy (meth)acrylate, melamine (meth)acrylate, or triazine (meth)acrylate, more preferably a urethane (meth)acrylate oligomer. An oligomer having a molecular weight of about 250 to 100000 is typically used.

The monomer having a radical polymerizable unsaturated group in the molecule is preferably, for example, a polyfunctional monomer, more preferably a polyfunctional (meth)acrylate.

Examples of the polyfunctional (meth)acrylate include diethylene glycol di(meth)acrylate, propylene glycol di(meth)acrylate, bisphenol A ethylene oxide-modified di(meth)acrylate, trimethyrolpropane tri(meth)acrylate, trimethylolpropane ethylene oxide tri(meth)acrylate, dipentaerythritol tetra(meth)acrylate, dipentaerythritol penta(meth)acrylate (pentafunctional (meth)acrylate), and dipentaerythritol hexa(meth)acrylate (hexafunctional (meth)acrylate). The term "polyfunctional monomer" herein refers to a monomer having multiple radical polymerizable unsaturated groups.

The ionizing radiation-curable resin composition preferably further contains an ionizing radiation-curable resin component containing a urethane acrylate oligomer and a polyfunctional monomer. The ionizing radiation-curable resin component particularly preferably contains a urethane acrylate oligomer and a polyfunctional monomer at a mass ratio (urethane acrylate oligomer/polyfunctional monomer) of 6/4-9/1. Within such a mass ratio range, better scratch resistance can be achieved.

If needed, a monofunctional monomer may be appropriately used in addition to the ionizing radiation-curable resin component.

Examples of the monofunctional monomer include methyl(meth)acrylate, 2-ethylhexyl(meth)acrylate, and phenoxyethyl(meth)acrylate.

In the case where ultraviolet light is used for crosslinking of the ionizing radiation-curable resin composition, a photopolymerization initiator is preferably added to the ionizing radiation-curable resin composition.

In the case where the ionizing radiation-curable resin composition is a resin composition containing a radical polymerizable unsaturated group, the photopolymerization initiator used may be an acetophenone, a benzophenone, a thioxanthone, a benzoin, a benzoin methyl ether, or a mixture of these.

In the case where the ionizing radiation-curable resin composition is a resin composition containing a cationic polymerizable unsaturated group, the photopolymerization initiator used may be an aromatic diazonium salt, an aromatic sulfonium salt, an aromatic iodonium salt, a metallocene compound, a benzoin sulfonic acid ester, or a mixture of these. The amount of the photopolymerization initiator is about 0.1 to 10 parts by mass per 100 parts by mass of the ionizing radiation-curable resin component.

The ionizing radiation-curable resin composition may further contain additives, if needed. Examples of the additives include thermoplastic resins (e.g., urethane resins, polyvinyl acetal resins, polyester resins, polyolefin resins, styrene resins, polyamide resins, polycarbonate resins, acetal resins, vinyl chloride-vinyl acetate copolymer resins, vinyl acetate resins, acrylic resins, cellulosic resins), lubricants (e.g., silicone resins, wax, fluororesins), ultraviolet absorbers (e.g., benzotriazole, benzophenone, triazine), light stabilizers (e.g., hindered amine radical scavengers), and colorants (e.g., dyes, pigments).

The electron beam source for the ionizing radiation used may be, for example, an electron beam accelerator of any type (Cockcroft-Walton type, Van de Graaff type, resonant transformer type, insulating core transformer type, linear type, Dynamitron type, radio frequency type) capable of delivering electrons having an energy of 70-1000 keV. The ionizing radiation dose is preferably, for example, about 1-10 Mrad.

The UV source for the ionizing radiation used may be, for example, a light source such as an ultra-high pressure mercury lamp, a high-pressure mercury lamp, a low-pressure mercury lamp, a carbon-arc lamp, a black light, or a metal halide lamp. The ultraviolet light used typically has a wavelength within a range of 190-380 nm.

The surface protective layer 4 may have any thickness. The lower limit of the thickness is preferably 0.1 $\mu$m and the upper limit thereof is preferably 50 $\mu$m. The lower limit is more preferably 1 $\mu$m and the upper limit is more preferably 35 $\mu$m.

When the surface protective layer 4 has a thickness of smaller than 0.1 $\mu$m, sufficient durability (e.g., scratch resistance, contamination resistance, weather resistance) may not be imparted. When the surface protective layer 4 has a thickness of larger than 50 $\mu$m, the transparent resin film of the present invention may have a lower transmittance, resulting in lower visibility of the picture of the picture layer.

(Other layers)

The decorative sheet 10 may include other layers such as a primer layer, an adhesive layer, or a backer layer, if needed.

The primer layer can be formed by applying a known primer agent. Examples of the primer agent include a urethane resin-based primer agent containing an acrylic-modified urethane resin (acrylic urethane resin) and the like, a primer agent containing a urethane-cellulosic resin (e.g., resin obtained by adding hexamethylene diisocyanate to a mixture of urethane and cellulose nitrate), and a resin-based primer agent containing an acrylic-urethane block copolymer. The primer agent may contain additives, if needed. Examples of the additives include fillers such as calcium carbonate and clay, flame retardants such as magnesium hydroxide, antioxidants, lubricants, blowing agents, ultraviolet absorbers, and light stabilizers. The amounts of the additives can be appropriately determined in accordance with the product characteristics.

The primer layer may contain an ultraviolet absorber, if needed.

The ultraviolet absorber used may be a known ultraviolet absorber selected as appropriate.

The primer layer may have any thickness. The thickness is preferably 0.01-10 $\mu$m, more preferably 0.1-1 $\mu$m.

The adhesive layer is not limited, and a known adhesive may be used. Examples of the adhesive include polyurethanes, acrylic resins, polyolefins, polyvinyl acetate, polyvinyl chloride, vinyl chloride-vinyl acetate copolymers, ethylene-acrylic acid copolymers, and ionomers, as well as butadiene-acrylonitrile rubber, neoprene rubber, and natural rubber. Each of these adhesives may be used alone or in combination of two or more.

The adhesive layer has a thickness after drying of preferably about 0.1-30 $\mu$m, more preferably about 1-5 $\mu$m.

The decorative sheet 10 may include a backer layer as a lowermost layer of the substrate 1 (on the side opposite to the side on which the picture layer 2 is laminated) in order to achieve scratch resistance and impact resistance.

The backer layer used may be a known backer layer selected appropriately, such as one disclosed in JP 2014-188941 A.

(Depressions ($D_1$) and ($D_2$))

In the decorative sheet 10, the transparent resin layer 3 has the depressions ($D_1$) harmonizing with the characteristic portions 2a of the picture layer 2 on the side opposite to a side facing the picture layer 2. The picture layer 2 has the depressions ($D_2$) positioned in the lamination direction of the depressions ($D_1$) on the side opposite to a side facing the substrate 1.

The shapes of the depressions ($D_1$) harmonize with the characteristic portions 2a of the picture layer 2.

The shapes of the depressions ($D_1$) may be the shapes of the outlines of the characteristic portions 2a of the pattern in the picture layer 2, simplified shapes of the outlines of the characteristic portions 2a of the pattern in the picture layer 2, or similar shapes in which the outlines of the characteristic portions 2a are reduced or enlarged.

The depressions ($D_1$) are positioned so as to harmonize with the characteristic portions 2a of the picture layer 2.

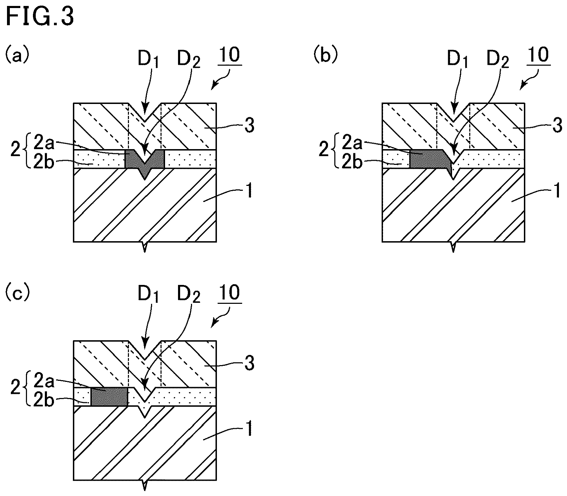

Figs. 3(a) to 3(c) each illustrate a cross-sectional view schematically showing an example of the decorative sheet of the present invention.

The positional relation between each depression ($D_1$) and the corresponding characteristic portion 2a of the picture layer 2 may be any of the relations shown in Figs 3(a) to 3(c).

Specifically, the characteristic portion 2a of the picture layer 2 and the depression ($D_1$) may be positioned so as to entirely overlap with each other in the lamination direction as illustrated in Fig. 3(a). Alternatively, the characteristic portion 2a of the picture layer 2 and the depression ($D_1$) may be positioned so as to partly overlap with each other in the lamination direction as illustrated in Fig. 3(b). Further alternatively, the characteristic portion 2a of the picture layer 2 and the depression ($D_1$) may be positioned so as not to overlap with each other as illustrated in Fig. 3(c).

It is to be noted that, even in the positional relation as shown in Fig. 3(c), the depression ($D_1$) is positioned in the vicinity of the characteristic portion 2a of the picture layer 2 in a plan view. The term "vicinity" means that the distance between the position of the characteristic portion 2a and the position of the depression ($D_1$) having a shape corresponding to the characteristic portion 2a in a plan view is 70 mm or shorter.

These can be determined as appropriate according to the design of the picture layer 2.

The harmonious relation between the depressions ($D_1$) and the characteristic portions 2a does not necessarily have to be established all over the design. Areas where the harmonious relation is not established may be partly present as long as the design properties are not impaired as a whole.

A description is later given on the width of the depression ($D_1$).

The depressions ($D_2$) are positioned in the lamination direction of the depressions ($D_1$).

As illustrated in Figs. 3(a) to 3(c), each depression ($D_2$) is positioned so as to overlap with the corresponding depression ($D_1$) in the lamination direction.

The depression ($D_2$) may be formed in the characteristic portion 2a of the picture layer 2 as illustrated in Fig. 3(a). Alternatively, the depression ($D_2$) may be formed extending from the characteristic portion 2a to the non-characteristic portion 2b of the picture layer 2 as illustrated in Fig. 3(b). Further alternatively, the depression ($D_2$) may be formed not in the characteristic portion 2a of the picture layer 2 as illustrated in Fig. 3(c) (the depression ($D_2$) is formed in the non-characteristic portion 2b).

In the decorative sheet 10, the depressions ($D_1$) have a depth H greater than the depth h of the depressions ($D_2$).

Owing to the presence of such depressions ($D_1$) and ($D_2$), the decorative sheet 10 exhibits extremely excellent design properties where a picture pattern of a picture layer harmonizes with depressions.

The relation between the depth H of the depressions ($D_1$) and the depth h of the depressions ($D_2$) is established for the depressions ($D_1$) and ($D_2$) positioned in the lamination direction of these depressions (overlapping with each other in a plan view).

In order to favorably impart a 3D effect, the ratio (h/H) of the depth h of the depressions ($D_2$) to the depth H of the depressions ($D_1$) in the decorative sheet 10 is preferably 0.25 or more and 0.60 or less, more preferably 0.26 or more and 0.55 or less, still more preferably 0.28 or more and 0.50 or less, particularly preferably 0.30 or more and 0.48 or less.

The depth H of the depressions ($D_1$) should be able to favorably impart a 3D effect. For example, the depth H

is preferably 50 μm or more and 200 μm or less, more preferably 55 μm or more and 190 μm or less.

The depth of the depressions ($D_2$) is preferably 13 μm or more and 100 μm or less, more preferably 17 μm or more and 92 μm or less, for example.

The numerical ranges of the depth H and depth h do not necessarily have to be achieved by all the depressions ($D_1$) and depressions ($D_2$). The depressions ($D_1$) and ($D_2$) not satisfying the numerical ranges may be present as long as the design properties are not impaired as a whole.

For example, provided that the design properties are not impaired as a whole, some of the depressions ($D_1$) and ($D_2$) harmonizing with each other may not satisfy the relation of depth H > depth h.

However, in order to favorably impart design properties, the proportion of the depressions ($D_1$) and ($D_2$) not satisfying the relation of depth H > depth h is preferably lower than 30% of all the depressions ($D_1$) and ($D_2$) positioned in the lamination direction of these depressions observed in an arbitral 10 cm × 10 cm area in a plan view of the decorative sheet 10. Such observation can be performed using an electron microscope and its measurement conditions described later.

The width W of the depressions ($D_1$) is preferably 400 μm or more and 2000 μm or less, more preferably 500 μm or more and 1500 μm or less, for example, though it depends on the picture pattern formed on the picture layer 2.

The width w of the depressions ($D_2$) is preferably 5 μm or more and 400 μm or less, more preferably 10 μm or more and 100 μm or less, for example.

The decorative sheet 10 preferably has depressions ($D_3$) on the side facing the picture layer 2 of the substrate 1 and depressions ($D_4$) on the side opposite to the side facing the picture layer 2 of the substrate 1, where the depressions ($D_3$) and the depressions ($D_4$) are positioned in the lamination direction of the depressions ($D_1$) and the depressions ($D_2$) .

In this case, the depth of the depressions is preferably decreased in the order of the depressions ($D_1$), the depressions ($D_2$), the depressions ($D_3$), and the depressions ($D_4$).

In the case where the decorative sheet 10 includes the surface protective layer 4 and has depressions ($D_5$) positioned in the lamination direction of the depressions ($D_1$) and the depressions ($D_2$) on a side opposite to a side facing the transparent resin layer 3 of the surface protective layer 4, the depth of the depressions is preferably decreased in the order of the depressions ($D_5$), the depressions ($D_1$), the depressions ($D_2$), the depressions ($D_3$), and the depressions ($D_4$) .

Owing to the presence of such depressions ($D_1$-$D_5$), the decorative sheet 10 can favorably exhibit design properties where a picture pattern of a picture layer harmonizes with depressions.

Such depressions ($D_1$-$D_5$) can be favorably formed by the method for producing a decorative sheet of the present invention described later.

The relation of the depths of the depressions ($D_1$-$D_5$) is established for the depressions ($D_1$-$D_5$) positioned in the lamination direction of these depressions (overlapping with each other in a plan view).

A description is given on how to measure the width W and depth H of the depressions ($D_1$) and the width w and depth h of the depressions ($D_2$).

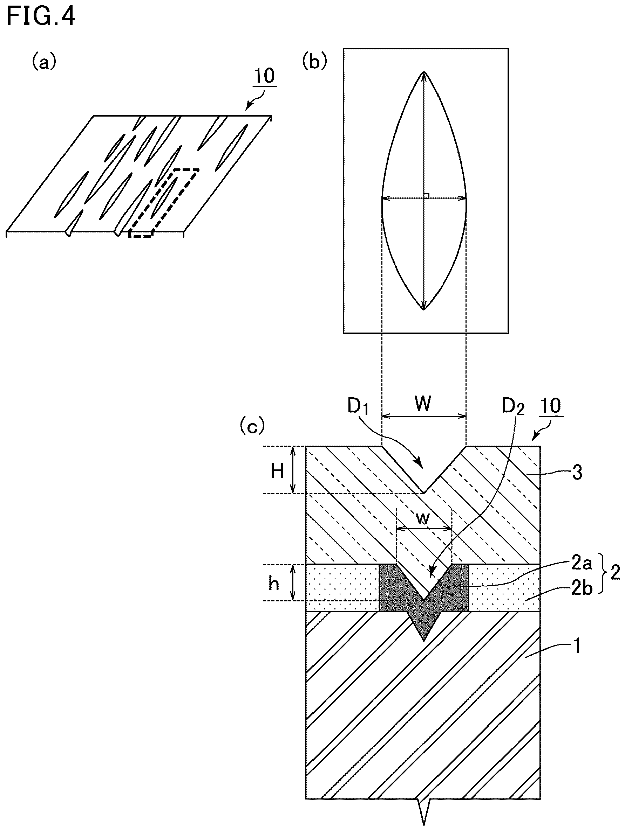

Fig. 4(a) illustrates a perspective view schematically showing an example of the decorative sheet of the present invention. Fig. 4(b) illustrates a top view schematically showing an example of the decorative sheet of the present invention. Fig. 4(c) illustrates a cross-sectional view schematically showing an example of the decorative sheet of the present invention.

As illustrated in Fig. 4(a), one depression formed on the surface of the decorative sheet 10 is selected. As illustrated in Fig. 4(b), the major axis and the minor axis of the selected depression are determined. Then, as illustrated in Fig. 4(c), the decorative sheet is cut along the minor axis and the obtained cross section is observed using an electron microscope to measure the widths (W and w) and depths (H and h) of the depressions ($D_1$) and ($D_2$) .

As illustrated in Fig. 4(c), the depth H of the depression ($D_1$) means the vertical distance from the surface of the transparent resin layer 3 to the deepest point of the depression ($D_1$). The depth h of the depression ($D_2$) means the vertical distance from the surface of the picture layer 2 to the deepest point of the depression ($D_2$) .

The major axis of the depression refers to the longest line connecting two points on the periphery of the depression. The minor axis of the depression refers to the longest line connecting two points on the periphery of the depression in the direction perpendicular to the major axis.

In the case where the transparent resin layer 3 is the outermost layer, the minor axis of the depression formed on the surface of the decorative sheet 10 coincides with the width W of the depression ($D_1$).

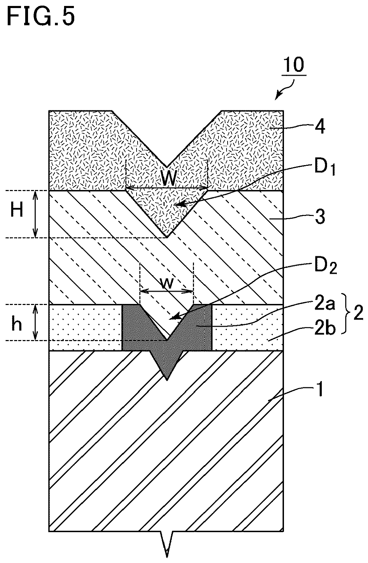

In contrast, as illustrated in Fig. 5, in the case where the decorative sheet 10 includes, on one side of the substrate 1, at least the picture layer 2, the transparent resin layer 3, and the surface protective layer 4 in the stated order, the width W of the depression ($D_1$) is smaller than the minor axis of the depression formed on the surface of the decorative sheet 10. In this case, a cross section obtained by cutting the decorative sheet 10 along the minor axis of the depression may be observed using an electron microscope for the measurement.

The width W and depth H of the depressions ($D_1$) and the width w and depth h of the depressions ($D_2$) are each an average of 10 values obtained by the measurement performed on arbitrarily selected 10 depressions formed on the surface of the decorative sheet 10 by the above method.

The conditions for the measurement using an electron microscope are use of a laser scanning confocal microscope (measurement head "VK-X1050", stand "VK-D1", and controller "VK-X1000"(available from KEYENCE CORPORATION)) and observation at 300x magnification, for example.

Examples of the usable resin coating composition include an organic solvent-based coating composition with excellent quick-drying properties and an aqueous coating composition which is friendly to the natural and working environment, each containing a urethane resin, an acrylic urethane resin, an epoxy resin, a polyester resin, or the like. In particular, preferred is an aqueous coating composition with a urethane resin blended therein.

Examples of the usable colorant include those mentioned for the picture layer.

The method described in JP 4569720 B may be employed as a coloring method using the resin coating composition.

<Method for producing decorative sheet>

The method for producing a decorative sheet of the present invention includes: a lamination step of laminating at least, on one side of a substrate, a picture layer including a characteristic portion and a non-characteristic portion and a transparent resin layer in the stated order to provide a laminate; and a formation step of embossing the laminate from a side opposite to a side facing the picture layer of the transparent resin layer to form a depression ($D_1$) harmonizing with the characteristic portion of the picture layer on the side opposite to a side facing the picture layer of the transparent resin layer and a depression ($D_2$) positioned in the lamination direction of the depression ($D_1$) on a side opposite to a side facing the substrate of the picture layer, wherein the depression ($D_1$) has a depth H greater than the depth h of the depression ($D_2$) .

The lamination step includes laminating at least, on one side of a substrate, a picture layer and a transparent resin layer in the stated order to provide a laminate.

The substrate 1, picture layer 2, and transparent resin layer 3 described above may be used in the lamination step. On one side of the substrate 1, at least the picture layer 2 and the transparent resin layer 3 are laminated in the stated order.

Preferably, the surface protective layer 4 is laminated on the side opposite to the side facing the picture layer 2 of the transparent resin layer 3.

The adhesive layer or primer layer described above may be provided on one side of each layer or between the layers.

The formation step includes embossing the laminate from a side opposite to a side facing the picture layer of the transparent resin layer to form depressions harmonizing with the characteristic portion of the picture layer.

The method including the formation step can form the depression ($D_1$) harmonizing with the characteristic portion of the picture layer and, following the formation of the depression ($D_1$), the depression ($D_2$) smaller than the depression ($D_1$) at the position in the lamination direction of the depression ($D_1$).

The embossing may be performed, for example, using a known sheet- or rotary embosser.

As the picture pattern used in the embossing, a design harmonizing with the picture layer 2 may be selected as appropriate.

The embossing may be performed at any temperature, preferably at a temperature that reduces a loss of the depressions, i.e., an embossing return, during molding by thermal press bonding.

In the case where the surface protective layer 4 is laminated, the formation step is preferably performed after lamination of the surface protective layer 4.

The decorative sheet produced by the method for producing a decorative sheet of the present invention includes at least, on one side of a substrate, a picture layer and a transparent resin layer in the stated order, wherein the transparent resin layer has a depression ($D_1$) harmonizing with a characteristic portion of the picture layer, the picture layer has a depression ($D_2$) positioned in the lamination direction of the depression ($D_1$), and the depression ($D_1$) has a depth H greater than the depth h of the depression ($D_2$). Thus, the decorative sheet has excellent design properties where a picture pattern of a picture layer harmonizes with depressions.

<Decorative panel>

The decorative panel of the present invention includes: an adherent; and the decorative sheet of the present invention on the adherend.

Examples of the adherend include: wooden boards such as wood veneers, plywood, particle boards, and medium-density fiberboards (MDF); gypsum-based boards such as gypsum boards and slag-gypsum boards; cement boards such as calcium silicate boards, asbestos boards, light weight aerated concrete boards, and hollow extruded cement boards; fiber cement boards such as pulp cement boards, asbestos cement boards, and wood chip cement boards; ceramic boards such as pottery boards, porcelain boards, earthenware boards, glass boards, and enameled boards; metal sheets such as iron sheets, galvanized steel sheets, polyvinyl chloride sol-applied steel sheets, aluminum sheets, and copper sheets; thermoplastic resin sheets such as polyolefin resin sheets, polyvinyl chloride resin sheets, acrylic resin sheets, ABS sheets, and polycarbonate sheets; thermosetting resin sheets such as phenolic resin sheets, urea resin sheets, unsaturated polyester resin sheets, polyurethane resin sheets, epoxy resin sheets, and melamine resin sheets; and so-called FRP sheets obtained by impregnating various fibrous substrates (e.g., glass fiber nonwoven fabric, woven fabric, paper) with resin (e.g., phenolic resin, urea resin, unsaturated polyester resin, polyurethane resin, epoxy resin, melamine resin, diallylphthalate resin) and curing the impregnated substrates for complication. Each of these may be used alone or two or more of these may be laminated to be used as a complex substrate.

Thermoplastic resin sheets and thermosetting resin sheets may contain various additives such as coloring materials (pigments or dyes), fillers such as wood flour or calcium carbonate, matting agents such as silica, blowing agents, flame retardants, lubricants such as talc, antistatic agents, antioxidants, ultraviolet absorbers, or light stabilizers, if needed.

The adherend may have any thickness.

The decorative sheet of the present invention may be laminated on the adherend by any method. For example, the decorative sheet of the present invention is laminated on the adherend via the primer layer or adhesive layer described above.

EXAMPLES

In the following, the present invention is more specifically described with reference to, but not limited to, examples.

(Example 1)

A substrate (60 $\mu$m thick, colored polypropylene sheet) preliminarily subjected to corona discharge treatment on both sides was provided. To one side of the substrate was applied an ink prepared by adding 5 parts by mass of hexamethylene diisocyanate to 100 parts by mass of a urethane/nitrocellulose resin to form a primer layer having a thickness of 2 $\mu$m. To the other side of the substrate was applied an ink prepared by adding 8 parts by mass of hexamethylene diisocyanate and 70 parts by mass of titanium oxide to 100 parts by mass of an acrylic urethane resin to form a hiding layer having a thickness of 2 $\mu$m.

To the hiding layer was applied an ink prepared by adding a coloring pigment to an acrylic urethane resin to form a design layer (wood-grain pattern) having a thickness of 1 $\mu$m.

To the design layer was applied an ink prepared by adding 11 parts by mass of hexamethylene diisocyanate to 100 parts by mass of an acrylic polyol/urethane resin to form an adhesive layer having a thickness of 2 $\mu$m.

To the adhesive layer was hot melt-extruded a polypropylene resin using a T-die extruder to form a transparent resin layer having a thickness of 100 $\mu$m. To the transparent resin layer was applied an ink prepared by adding 6 parts by mass of hexamethylene diisocyanate to 100 parts by mass of an acrylic polyol/urethane resin to form a primer layer having a thickness of 2 $\mu$m. To the primer layer was applied an acrylate-based electron beam-curable resin by gravure coating to a solid content of 30 g/m$^2$, dried, and irradiated with an electron beam under the conditions of an oxygen concentration of 200 ppm, an accelerating voltage of 165 KeV, and 5 Mrad. Thus, a surface protective layer containing an electron beam-curable resin was formed. Then, embossing was performed from the surface protective layer side to form depressions harmonizing with the design layer. Thus, a decorative sheet was produced.

The color difference $\Delta E$ between the characteristic portion and the non-characteristic portion of the picture layer (design layer) was 3.0.

(Examples 2-10, Comparative Example 1)

A decorative sheet was produced as in Example 1, except that the size of depressions to be formed was changed.

<Measurement of width and depth of depression>

Ten depressions formed on the surface of the produced decorative sheet were arbitrarily selected, and the major axis and minor axis of each selected depression were determined. The decorative sheet was cut along the determined minor axis, and the obtained cross section was observed at 300x magnification using a laser scanning confocal microscope (measurement head "VK-X1050", stand "VK-D1", and controller "VK-X1000" (all available from KEYENCE CORPORATION)). The widths (W and w) and depths (H and h) of the depressions (D$_1$) and (D$_2$) were measured, and the average values were calculated.

Based on the average values, a ratio (h/H) of the depth h of the depression ($D_2$) to the depth H of the depression ($D_1$) was calculated.

Table 1 shows the measurement results.

<Evaluation of design properties>

The top surface of the produced decorative sheet was visually observed, and whether or not the picture pattern of the picture layer harmonizes with the depressions was sensorily evaluated based on the criteria shown below. Table 1 shows the evaluation results.

+: They give a harmonized impression.
-: They fail to give a harmonized impression.

[Table 1]

| | Depression ($D_1$) formed in transparent resin layer | | Depression ($D_2$) formed in picture layer | | Ratio (h/H) | Design properties |
|---|---|---|---|---|---|---|
| | Width of depression | Depth of depression | Width of depression | Depth of depression | | |
| | W ($\mu$m) | H ($\mu$m) | w ($\mu$m) | h ($\mu$m) | | |
| Example 1 | 885 | 59 | 852 | 17 | 0.288 | + |
| Example 2 | 590 | 119 | 572 | 59 | 0.496 | + |
| Example 3 | 609 | 121 | 589 | 48 | 0.397 | + |
| Example 4 | 775 | 122 | 768 | 35 | 0.287 | + |
| Example 5 | 771 | 120 | 798 | 55 | 0.458 | + |
| Example 6 | 1712 | 101 | 1843 | 55 | 0.545 | + |
| Example 7 | 488 | 71 | 588 | 31 | 0.437 | + |
| Example 8 | 1256 | 97 | 1201 | 48 | 0.495 | + |
| Example 9 | 1274 | 113 | 1219 | 57 | 0.504 | + |
| Example 10 | 1828 | 113 | 1935 | 32 | 0.283 | + |
| Comparative Example 1 | 755 | 115 | 0 | 0 | 0 | - |

As shown in Table 1, extremely excellent design properties where a picture pattern of a picture layer harmonizes with depressions were exhibited by a decorative sheet having a depression ($D_1$) harmonizing with a characteristic portion of a picture layer in a transparent resin layer and a depression ($D_2$) positioned in the lamination direction of the depression ($D_1$) wherein the depth H of the depression ($D_1$) is greater than the depth h of the depression ($D_2$).

INDUSTRIAL APPLICABILITY

The present invention can provide a decorative sheet having extremely excellent design properties where a picture pattern of a picture layer matches with depressions.

REFERENCE SIGNS LIST

1    substrate
2    picture layer
2a   characteristic portion
2b   non-characteristic portion

3     transparent resin layer
4     surface protective layer
10    decorative sheet

**Claims**

1. A decorative sheet comprising:

    a substrate;
    a picture layer; and
    a transparent resin layer,
    the decorative sheet comprising at least the picture layer and the transparent resin layer in a stated order on one side of the substrate,
    the picture layer comprising a characteristic portion and a non-characteristic portion,
    the transparent resin layer having a depression ($D_1$) harmonizing with the characteristic portion of the picture layer on a side opposite to a side facing the picture layer,
    the picture layer having a depression ($D_2$) positioned in a lamination direction of the depression ($D_1$) on a side opposite to a side facing the substrate,
    the depression ($D_1$) having a depth H greater than a depth h of the depression ($D_2$).

2. The decorative sheet according to claim 1,
wherein a ratio (h/H) of the depth h of the depression ($D_2$) to the depth H of the depression ($D_1$) is 0.25 or more and 0.60 or less.

3. The decorative sheet according to claim 1 or 2 further comprising
a surface protective layer on the side opposite to a side facing the picture layer of the transparent resin layer.

4. The decorative sheet according to any one of claims 1 to 3,
wherein the characteristic portion of the picture layer is: a vessel, a knot, an annual ring, or a mottle in a wood-grain pattern; or a stripe formed by different crystalline components in a rock or a crack in a stone-grain pattern.

5. The decorative sheet according to any one of claims 1 to 4,
wherein the picture layer has a color difference ΔE between the characteristic portion and the non-characteristic portion of 1.3 or more.

6. A decorative panel comprising:

    an adherend; and
    the decorative sheet according to any one of claims 1 to 5 on the adherend.

7. A method for producing a decorative sheet, comprising:

    a lamination step of laminating at least, on one side of a substrate, a picture layer comprising a characteristic portion and a non-characteristic portion and a transparent resin layer in a stated order to provide a laminate; and
    a formation step of embossing the laminate from a side opposite to a side facing the picture layer of the transparent resin layer to form a depression ($D_1$) harmonizing with the characteristic portion of the picture layer on the side opposite to a side facing the picture layer of the transparent resin layer and a depression ($D_2$) positioned in a lamination direction of the depression ($D_1$) on a side opposite to a side facing the substrate of the picture layer,
    wherein the depression ($D_1$) has a depth H greater than a depth h of the depression ($D_2$).

## FIG.1

## FIG.2

(a)

(b)

# FIG.3

(a)

(b)

(c)

# FIG.4

(a)

(b)

(c)

# FIG.5

| | INTERNATIONAL SEARCH REPORT | International application No. |
|---|---|---|
| | | PCT/JP2021/002264 |

**A. CLASSIFICATION OF SUBJECT MATTER**
B32B 27/00(2006.01)i; E04F 13/08(2006.01)i; B32B 3/30(2006.01)i; B32B 33/00(2006.01)i
FI: B32B3/30; B32B27/00 E; E04F13/08 A; E04F13/08 E; B32B33/00

According to International Patent Classification (IPC) or to both national classification and IPC

**B. FIELDS SEARCHED**

Minimum documentation searched (classification system followed by classification symbols)
B32B27/00; E04F13/08; B32B3/30; B32B33/00

| Documentation searched other than minimum documentation to the extent that such documents are included in the fields searched | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2012-250459 A (RIKEN TECHNOS CORPORATION) 20 December 2012 (2012-12-20) claims, paragraphs [0010]-[0012], examples, drawings | 1-7 |
| X | JP 9-254348 A (TOPPAN PRINTING CO., LTD.) 30 September 1997 (1997-09-30) claims, paragraphs [0014], [0016], [0025], [0026], examples, drawings | 1-7 |
| A | JP 56-10371 A (NODA PLYWOOD INCORPORATED COMPANY) 02 February 1981 (1981-02-02) entire text | 1-7 |
| A | JP 7-156596 A (DAINIPPON PRINTING CO., LTD.) 20 June 1995 (1995-06-20) entire text | 1-7 |

☐ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 12 March 2021 (12.03.2021) | 06 April 2021 (06.04.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

| International application No. |
| --- |
| PCT/JP2021/002264 |

| Patent Documents referred in the Report | Publication Date | Patent Family | Publication Date |
| --- | --- | --- | --- |
| JP 2012-250459 A | 20 Dec. 2012 | (Family: none) | |
| JP 9-254348 A | 30 Sep. 1997 | (Family: none) | |
| JP 56-10371 A | 02 Feb. 1981 | (Family: none) | |
| JP 7-156596 A | 20 Jun. 1995 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016182748 A
- JP 2014188941 A
- JP 4569720 B